# EUROPÄISCHE PATENTSCHRIFT

(11) **EP 0 954 152 B1**
(45) Veröffentlichungstag und Bekanntmachung des Hinweises auf die Patenterteilung: **23.11.2005**
(21) Anmeldenummer: 99107683.7
(22) Anmeldetag: 16.04.1999
(51) Int. Cl.: H04M 3/30, H04M 3/00, H04M 3/18

(54) **Anordnung zum Messen von Fremdspannungen auf Anschlussleitungen in einem Teilnehmeranschlussmodul**
Arrangement for measuring external voltages on connection lines in a subscriber connection module
Montage pour mesurer des tensions externes sur des lignes de raccordement dans un module de connexion d' abonné

(30) Priorität: 29.04.1998 DE 19819209
(43) Veröffentlichungstag der Anmeldung: 03.11.1999
(73) Patentinhaber: SIEMENS AKTIENGESELLSCHAFT, 80333 München (DE)
(72) Erfinder: Wiggers, Rainer, 17489 Greifswald (DE)

(56) Entgegenhaltungen:
- EP-A- 0 419 935
- EP-A- 0 580 947
- DE-A- 3 235 282
- DE-B- 1 231 767

## Beschreibung

Für den Anschluß von analogen, 2-drähtigen Anschlußleitungen, d.h. analogen Kommunikationsendgeräten sind in den Vermittlungsanlagen oder Vorfeldkommunikationssytemen im Zubringernetz von Kommunikationsnetzen Teilnehmeranschlußmodule integriert. Die Messung von Anschlußleitungs-Parametern, beispielsweise der Fremdspannung, erfolgt hierbei durch zentrale Meßeinrichtungen, die durch auf den Teilnehmeranschlußmodulen angeordneten Schaltmitteln auf die zu messende Anschlußleitung geschaltet werden. In derzeit konzipierten Teilnehmeranschlußmodulen ist die Messung von Fremdspannungen durch das jeweilige Teilnehmeranschlußmodul selbst vorgesehen.

Für die Speisung der Anschlußleitung sind Teilnehmeranschlußmodule mit SLIC's (Subscriber Line Interface Circuits) und CODEC's (Coder/DECoder) ausgestattet, mit deren Hilfe zusätzlich die in der Fachwelt bekannt BORSHT-Funktionalitäten (Battery Feeding, Overvoltage protection, Ringing, Supervision Hybrid and Test) zum Betrieb der Anschlußleitung unterstützt werden. Die SLIC-Schaltkreise werden entsprechend ihrer prinzipiell unterschiedlichen Wirkmechanismen in eine Gruppe der spannungsspeisenden SLIC's und eine Gruppe der stromspeisenden SLIC's unterschieden. Bei den spannungsspeisenden SLIC's wird eine Ausgangsspannung vorgegeben und durch Rücklesung der resultierende Stromfluß bestimmt. Im Gegensatz hierzu wird bei den stromspeisenden SLIC's ein Ausgangsstrom vorgegeben und durch Rücklesen die resultierende Spannung ermittelt. Da durch spannungsspeisende SLIC's zusätzliche Funktionen realisierbar sind, wie z.B. Erzeugen und Einkoppeln von Rufspannungen und Gebührenimpulsen, werden spannungsspeisende SLIC's bevorzugt eingesetzt. Bei spannungsspeisenden SLIC's stellt jedoch die Messung der Fremdspannung ein Problem dar, das mit stromspeisenden SLIC's einfacher gelöst Gruppen von SLIC's eine erhebliche Empfindlichkeit gegenüber hohen Fremdspannungen zu. Um die SLIC's vor zu hohen Fremdspannungen zu schützen, muß zwischen den Anschlußleitungen und den Anschlüssen des SLIC's jeweils ein Überspannungs- und ein Überstromelement eingefügt werden. Durch diese Schutzmaßnahme wird die Messung der Fremdspannung zusätzlich erschwert.

In DE 1 231 767 ist ein Verfahren zur Fernmessung an Teilnehmerstromkreisen in Fernsprechnetzen unbesetzter Ämter offenbart, bei dem jeder in der Messanordnung anfallende Messwert zunächst in eine Gleichspannung mit dem Messwert entsprechender Amplitude umgeformt wobei die Gleichspannung unmittelbar zur Steuerung der Frequenz eines Relaxationsoszillators ausgenutzt wird, dessen Rechteckschwingungen nach Durchlaufen eines Tiefpasses über die Verbindung zwischen dem unbesetztem Amt und der Messstelle zur Messstelle rückübertragen und dort in einen ihrer jeweilige Frequenz proportionalen Strom umgesetzt werden, welcher auf dem Instrument der Meßstelle angezeigt wird.

Die der Erfindung zugrundeliegende Aufgabe besteht darin, insbesondere spannungsspeisende Teilnehmeranschlußmodule für eine Messung von Fremdspannungen auf der Anschlußleitung auszugestalten. Die Erfindung wird ausgehend von einem Teilnehmeranschlußmodul gemäß den Merkmalen des Oberbegriffs des Anspruch 1 durch dessen kennzeichnende Merkmale gelöst.

Der wesentliche Aspekt der erfindungsgemäßen Anordnung ist darin zu sehen, daß die in beiden Zuleitungen eingefügte Schutz- und ggf. Testanschaltung jeweils durch einen Widerstand überbrückt sind, und daß bei einer Fremdspannungsmessung zumindest eine Zuleitung unterbrochen und eine konstante Spannung auf den zumindest einen Anschluß der Schnittstellenschaltung geschaltet wird, wobei der Fremdstrom bei unterbrochener Zuleitung in der Schnittstellenschaltung gemessen wird. Durch das Einfügen der Widerstände können Fremdspannungen auch bei defekten Überstromelementen gemessen werden. Bei der erfindungsgemäßen Anordnung können die für den Anschluß eines externen Meßgerätes vorzusehenden Anschlüsse entfallen, wodurch die Teilnehmeranschlußmodule wirtschaftlicher zu realisieren sind.

Vorteilhaft ist in die beiden Zuleitungen jeweils ein Schalter zu deren Unterbrechung eingefügt und im Teilnehmeranschlußmodul sind Steuermittel zur Steuerung der Schalter vorgesehen - Anspruch 2. Alternativ ist in die beiden Zuleitungen jeweils ein Umschalter zu deren Unterbrechung eingefügt. Hierbei sind die beiden weiteren Umschaltekontakte für Meßzwecke vorgesehen und im Teilnehmeranschlußmodul sind Steuermittel zur Steuerung der Umschalter vorgesehen - Anspruch 3. Üblicherweise ist für die Umschaltung der Anschlußleitung auf ein externes Meßgerät oder einen Referenzwiderstand bereits ein Umschalter in das Teilnehmeranschlußmodul integriert und kann in die erfindungsgemäße Anordnung einbezogen werden. Die Schalter bzw. Umschalter sind durch elektromechanische oder elektronische Schalter realisierbar - Anspruch 4 -, wobei elektronische Schalter direkt durch elektronische Steuermittel ansteuerbar sind.

Gemäß einer vorteilhaften Ausgestaltung ist die Höhe der Widerstandswerte auf die maximal zu messende Fremdspannung abzustimmen - Anspruch 5. Da Fremdspannungen bis zu einigen Hundert Volt auftreten und zu messen sind, sind meist hohe Widerstandswerte vorgesehen.

In den Teilnehmeranschlußmodulen sind Mittel zur Konvertierung des gemessenen Fremdstromes in eine Fremdspannung vorgesehen - Anspruch 6. Die Konvertierung erfolgt vorteilhaft mit Hilfe eines meist vorhandenen Mikroprozessors, in dem dem gemessenen Fremdstrom bei bekannten Widerstandswerten die Fremdspannung berechnet wird.

Das Teilnehmeranschlußmodul umfaßt zusätzlich Steuermittel zur Bewertung der Fremdspannung und zum Übermitteln der gemessenen Fremdspannung an übergeordnete Verarbeitungsdmodule - Anspruch 7. Diese Steuermittel sind in einem Mikroprozessor zusammen mit den Steuermitteln zur Ansteuerung der Schalter bzw. des Umschalters realisiert. Hierbei sind die Steuermittel zum Steuern der Schalter bzw. Umschalter derart ausgestaltet, daß bei Überschreiten der gemessenen Fremdspannung über eine vorgegebene Spannungsschwelle die Zuleitung unterbrochen bleibt - Anspruch 8. Durch diese Maßnahme wird die Eingangsschaltung der SLIC's vor Überlastung geschützt, sofern die Anschlußleitung durch die Überspannungselemente noch nicht von den Anschlüssen des SLIC's getrennt ist.

Im folgenden wird die erfindungsgemäße Anordnung anhand eines Blockschaltbildes näher erläutert.

Das Blockschaltbild zeigt ein Teilnehmeranschlußmodul SLM für den Anschluß mehrerer analoger, zweidrähtigen Anschlußleitungen ASL. Beispielhaft ist eine Anschlußleitung ASL und ihr Anschluß im Teilnehmeranschlußmodul dargestellt. Das Teilnehmeranschlußmodul SLM ist beispielsweise in einer Vermittlungseinrichtung angeordnet und ist für den Anschluß von analogen Kommunikationsendgeräten, beispielsweise von analogen Telefonen, vorgesehen.

Im Teilnehmeranschlußmodul SLM sind die Adern a/b der Anschlußleitung ASL auf jeweils einen Umschaltekontakt eines Umschalters U geschaltet. Der jeweils weitere Umschaltekontakt der beiden Umschalter U kann zu Testzwecken mit den beiden Enden eines Referenzwiderstandes oder eines Meßgerätes - im Blockschaltbild durch die Bezeichnunung MZ angedeutet - verbunden werden. Der jeweilige Mittenkontakt der beiden Umschalter U ist jeweils mit einem Sicherungselement SE verbunden, wobei deren jeweils weiterer Anschluß auf jeweils einen Anschluß einer Anschlußschaltung SLIC geführt ist. Von dem jeweils weiteren Anschluß des Sicherungselelementes SE ist zusätzlich jeweils ein Spannungsableitelement SAE - beispielsweise gasgefüllte Überspannungsableiter - auf einen gemeinsamen Erdungspunkt EP geschaltet. Die beiden Sicherungselemente SE und die Spannungsableitelemente SAE bilden eine Überspannungsschutzeinrichtung PS, die alternativ auch durch Halbleiter-Überspannungsschutzeinrichtungen realisierbar sind - beispielsweise durch 'Tripolar Transient Surge Arrestor' der Fa. SGS-Thomson Microelectronics. Der Bereich zwischen dem mit der Anschlußleitung ASL verbundenen Umschaltekontakt des Umschalters U und dem mit der Anschlußschaltung SLIC verbundenen weiteren Anschluß des Sicherungselementes SE ist als Zuleitung ZL von der Anschlußleitung ASL zur Anschlußschaltung SLIC bestimmt. Diese Zuleitung ZL ist jeweils durch einen Widerstand R überbrückt, d.h. der Widerstand R ist jeweils parallel geschaltet. Eingänge E der Anschlußschaltung SLIC sind mit einer Kodier-/Dekodierschaltung CODEC verbunden, mit deren Hilfe eine Analog-/Digitalwandlung bzw. Digital-/Analogwandlung der von der Anschlußleitung ASL bzw. zu dieser zu übermittelnden, in analoger bzw. digitaler Form vorliegenden Informationen durchgeführt wird.

Für die Steuerung und Überwachung des Teilnehmeranschlußmoduls SLM sowie die Steuerung der Umschalter U ist eine Steuereinheit ST vorgesehen, die durch einem Mikroprozessor realisiert ist. Die Steuereinheit ST ist ebenfalls für die Berechnung einer Fremdspannung fs sowie für die Bewertung der Fremdspannung fs zuständig.

Im Betriebsfall ist durch die Steuereinheit ST jeweils der Mittelkontakt auf den Umschaltkontakt der Umschalter U geschaltet. Hierdurch werden von der Anschlußleitung ASL übermittelte analoge Signale as, insbesondere analoge Fernsprechsignale, über die Sicherungselemente SE direkt an die Anschlußschaltung SLIC und umgekehrt übertragen. In der Anschlußschaltung SLIC und dem Kodierer CODEC wird ein fließender Schleifenstrom detektiert, ggf. der Schleifenstrom begrenzt, eine Echokompensation des Empfangssignals sowie eine Sende-Empfangswege-Filterung durchgeführt und analog vorliegende Signale kodiert bzw. digital vorliegende Signale dekodiert, d.h. analog-digital- bzw. digital-analog-gewandelt. Eine Anschlußschaltung SLIC mit derartigen Funktionen ist beispielsweise in einem integrierten Baustein MTK 40130 der Fa. Alcatel Mietec realisiert.

Eine Messung auf Fremdspannungen fs auf den Adern a/b der Anschlußleitung ASL wird durchgeführt, wenn kein Schleifenstrom fließt, d.h. keine Verbindung zum Kommunikationsendgerät aufgebaut ist. Des weiteren werden mit Hilfe der Steuerung ST die beiden Umschalter U derart gesteuert, daß die Zuleitung ZL unterbrochen ist. Hierdurch wird eine auf eine oder beide Adern a/b der Anschlußleitung ASL einwirkende Fremdspannung - beispielsweise mit einer Höhe von 200 V - über die beiden Widerstände R an die Anschlüsse der Anschlußschaltung SLIC geführt. Die Widerstände R sind derart zu dimensionieren, daß eine maximal zu messende Fremdspannung fu von beispielsweise 250 Volt zu keiner Überlastung der Anschlußschaltung SLIC führt. Des weiteren wird durch die Anschlußschaltung SLIC eine konstante Spannung uk an eine oder beide Adern a/b an die überbrückte Zuleitung ZL bzw. an die beiden Widerstände R gesteuert.

In der Anschlußschaltung SLIC wird jedoch nicht die Fremdspannung fs direkt sondern der durch die Fremdspannung fu fließende Fremdstrom fi der jeweiligen Ader a/b gemessen. In der Anschlußschaltung SLIC wird der gemessene analoge Fremdstrom fs in einen digital, den gemessenen Fremdstrom fi repräsentierenden Meßwert dfi konvertiert und anschließend an die Steuerung ST übermittelt - im Blockschaltbild durch eine mit einem Pfeil versehene, punktierte Linie angedeutet.

In der Steuereinheit ST ist eine programmtechnisch realisierte Meßroutine MR implementiert, mit deren Hilfe aus dem übermittelten Meßwert dfi unter Berücksichtigung der bekannten Werte der Widerstände R und der durch den SLIC eingespeisten, konstanten Spannung uk die jeweilige Fremdspannung fs berechnet wird. Die berechnete Fremdspannung fu kann mit Hilfe einer ebenfalls programmtechnisch realisierten Übertragungsroutine UR an übergeordnete, nicht dargestellte Komponenten K beispielsweise einer Vermittlungseinrichtung übermittelt werden, um dort beispielsweise einen Alarm auszulösen und die gemessene Fremdspannung fu anzuzeigen.

Mit Hilfe einer wiederum in der Steuereinheit ST angeordneten Bewertungsroutine BR kann die gemessene Fremdspannung fu mit einer vorgegebenen Schwellwert-Spannung vu verglichen werden. Dieser Spannungsvergleich wird zum Schutz der Anschlußschaltung SLIC durchgeführt, wobei bei einem Übersteigen der gemessenen Fremdspannung fu über die vorgegebene Schwellwert-Spannung vu der Umschalter U nicht mehr in die Betriebsstellung sondern in der Meßstellung bleibt, d.h. die Anschlußleitung ASL bleibt über die beiden Widerstände R an die Anschlußschaltung SLIC geschaltet. In der Bewertungsroutine BR können auch Vergleiche mit weiteren Schwellwert-Spannungen durchgeführt werden, um beispielsweise bei Überschreiten einer gemessenen Fremdspannung fu über einen definierten Wert einen Alarm zu bilden und diesen über die Übermittlungsroutine UR an übergeordnete Komponenten K zu übertragen.

Tritt eine Fremdspannung fs auf einer oder beiden Adern a/b auf, die die Ableitspannung der Spannungsableitelemente SAE übersteigt, so wird diese Fremdspannung fs über die jeweiligen Spannungsableitelemente SAE zum Erdungspunkt abgeleitet, wobei aufgrund des erhöhten Stromflusses ein oder beide Sicherungselemente SE die Zuleitung ZL unterbrechen. In diesem Fall kann die Messung der Fremdspannung fs ohne weitere Unterbrechung der Zuleitung ZL über die beiden Widerstände R gemessen werden.

Die erfindungsgemäße Anordnung kann auch bei anderen Realisierungen von Teilnehmeranschlußmodulen SLM mit mehr oder weniger angeschlossenen Anschlußleitungen ASL eingesetzt werden, bei denen andere Überspannungselemente wie beispielsweise Zenerdioden eingesetzt werden oder andere Schaltmittel - beispielsweise elektronische Schaltmittel - vorgesehen sind.

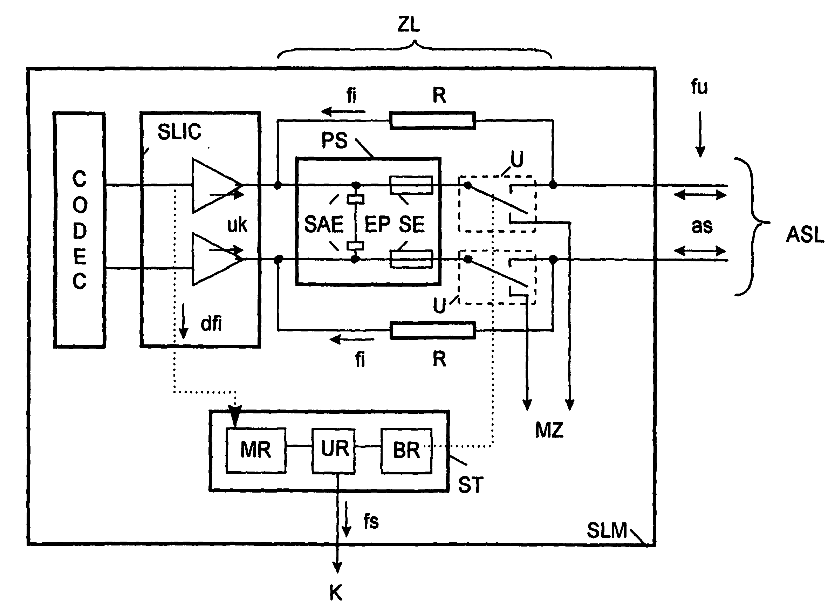

## Patentansprüche

1. Anordnung zum Messen von Fremdspannungen (fu) auf einer zweidrähtigen Anschlußleitung (ASL) in einem Teilnehmeranschlußmodul (SLM), in dem jeweils ein Anschluß einer spannungsspeisenden Anschlußschaltung (SLIC) über eine Zuleitung (ZL), in die zumindest ein Überspannungselement (SE, SAE) eingefügt ist, mit einer Ader (a/b) der Anschlußleitung (ASL) verbunden ist,
**dadurch gekennzeichnet,**
**dass** die beiden Zuleitungen (ZL) jeweils durch einen Widerstand (R) überbrückt sind,
**dass** die Anordnung derart ausgestaltet ist, dass bei einer Fremdspannungsmessung zumindest eine Zuleitung (ZL) unterbrochen und eine konstante Spannung (uk) auf den zumindest einen Anschluß der Anschlußschaltung (SLIC) geschaltet wird, und dass der Fremdstrom (fi) in der Anschlußschaltung (SLIC) gemessen wird.

2. Anordnung nach Anspruch 1, **dadurch gekennzeichnet,**
**daß** in die beiden Zuleitungen (ZL) jeweils ein Schalter zu deren Unterbrechung eingefügt ist, und daß im Teilnehmeranschlußmodul (SLM) Steuermittel (ST) zur Steuerung der Schalter vorgesehen sind.

3. Anordnung nach Anspruche 1, **dadurch gekennzeichnet,**
**daß** in die beiden Zuleitungen (ZL) jeweils ein Umschalter (U) zu deren Unterbrechung eingefügt ist, daß die beiden weiteren Umschaltekontakte für Meßzwecke vorgesehen sind, und daß im Teilnehmeranschlußmodul (SLM) Steuermittel (ST) zur Steuerung der Umschalter (U) vorgesehen sind.

4. Anordnung nach Anspruch 2 oder 3, **dadurch gekennzeichnet,**
**daß** der Schalter bzw. Umschalter (U) durch einen elektronischen oder elektromechanischen Schalter bzw. Umschalter realisiert ist.

5. Anordnung nach einem der Ansprüche 1 bis 4, **dadurch gekennzeichnet,**
**daß** die Höhe der Widerstandswerte auf die maximal zu messende Fremdspannung (fu) abgestimmt ist.

6. Anordnung nach einem der Ansprüche 1 bis 5, **dadurch gekennzeichnet,**
**daß** Mittel (SLIC, ST) zur Konvertierung des gemessenen Fremdstromes (fi) in eine Fremdspannung (fu) vorgesehen sind.

7. Anordnung nach einem der Ansprüche 1 bis 6, **dadurch gekennzeichnet,**
**daß** Steuermittel (ST) zur Bewertung der Fremdspannung (fu) und zum Übermitteln der gemessenen Fremdspannung (fu) an übergeordnete Verarbeitungsmodule (K) vorgesehen sind.

8. Anordnung nach Anspruch 7, **dadurch gekennzeichnet,**
**daß** die Steuermittel (BR) zum Steuern der Schalter bzw. Umschalter (U) derart ausgestaltet sind, daß bei Überschreiten der gemessenen Fremdspannung (fu) über eine vorgegebene Spannungsschwelle die Zuleitung (ZL) unterbrochen bleibt.

## Claims

1. Arrangement for measuring interference voltages (fu) on a two-wire subscriber line (ASL) in a subscriber line module (SLM) in which in each case one terminal of a voltage-feeding subscriber line interface circuit (SLIC) is connected via a feeder (ZL), into which at least one overvoltage element (SE, SAE) has been inserted, to a wire (a/b) of the subscriber line (ASL)
**characterised in that**
the two feeders (ZL) are each bridged by a resistor (R),
the arrangement is embodied in such a way that at least one feeder (ZL) will be interrupted and a constant voltage (uk) switched to the at least one terminal of the subscriber line interface circuit (SLIC) when an interference-voltage measurement is carried out, and
the interference current (fi) is measured in the subscriber line interface circuit (SLIC).

2. Arrangement according to claim 1, **characterised in that**
a switch has been inserted into each of the two feeders (ZL) for the purpose of interrupting them and control means (ST) are provided in the subscriber line module (SLM) for controlling the switches.

3. Arrangement according to claim 1, **characterised in that**
a changeover switch (U) has been inserted into each of the two feeders (ZL) for the purpose of interrupting them, and the two further changeover contacts are provided for measuring purposes, and control means (ST) are provided in the subscriber line module (SLM) for controlling the changeover switches (U).

4. Arrangement according to claim 2 or 3,
**characterised in that**
the switch or, as the case may be, changeover switch (U) is realised using an electronic or electromechanical switch or, as the case may be, changeover switch.

5. Arrangement according to one of claims 1 to 4,
**characterised in that**
the resistance values are aligned in their magnitude with the maximum interference voltage (fu) to be measured.

6. Arrangement according to one of claims 1 to 5,
**characterised in that**
means (SLIC, ST) for converting the measured interference current (fi) into an interference voltage (fu) are provided.

7. Arrangement according to one of claims 1 to 6,
**characterised in that**
control means (ST) for evaluating the interference voltage (fu) and conveying the measured interference voltage (fu) to higher-order processing modules (K) are provided.

8. Arrangement according to claim 7, **characterised in that**
the control means (BR) for controlling the switches or, as the case may be, changeover switches (U) are embodied in such a way that the feeder (ZL) will remain interrupted if the measured interference voltage (fu) exceeds a prespecified voltage threshold.

## Revendications

1. Dispositif pour mesurer des tensions d'origine extérieure (fu) sur une ligne de branchement (ASL) à deux fils d'un module de branchement d'abonné (SLM), dans lequel respectivement un branchement d'un circuit de branchement (SLIC) alimentant en tension est relié par une ligne d'arrivée (ZL), dans laquelle est inséré au moins un élément de surtension (SE, SAE), à un fil (a/b) de la ligne de branchement (ASL)
**caractérisé en ce que**,
les deux lignes d'arrivée (ZL) sont shuntées chacune par une résistance (R),
**en ce que** le dispositif est conçu de telle sorte que, lors d'une mesure de tension d'origine extérieure, au moins une ligne d'arrivée (ZL) est interrompue et une tension (uk) constante est branchée sur le au moins un branchement du circuit de branchement (SLIC), et **en ce que** le courant étranger (fi) est mesuré dans le circuit de branchement (SLIC).

2. Dispositif selon la revendication 1, **caractérisé en ce que** un interrupteur est inséré dans chacune des deux lignes d'arrivée (ZL) pour leur interruption, et **en ce que** des moyens de commande (ST) sont prévus dans le module de branchement d'abonné (SLM) pour la commande des interrupteurs.

3. Dispositif selon la revendication 1, **caractérisé en ce que** un commutateur (U) est inséré dans chacune des deux lignes d'arrivée (ZL) pour leur interruption **en ce que** les deux autres contacts d'inversion sont prévus pour des mesures, et **en ce que** des moyens de commande (ST) pour la commande des commutateurs (U) sont prévus dans le module de branchement d'abonné (SLM).

4. Dispositif selon la revendication 2 ou 3, **caractérisé en ce que**
l'interrupteur resp. le commutateur (U) est réalisé par un interrupteur resp. commutateur électronique ou électromécanique.

5. Dispositif selon l'une quelconque des revendications 1 à 4, **caractérisé en ce que**
le niveau des valeurs de résistance est adapté à la tension d'origine extérieure (fu) maximale à mesurer.

6. Dispositif selon l'une quelconque des revendications 1 à 5, **caractérisé en ce que**
des moyens (SLIC, ST) sont prévus pour la conversion du courant étranger (fi) mesuré en une tension d'origine extérieure (fu).

7. Dispositif selon l'une quelconque des revendications 1 à 6, **caractérisé en ce que**
des moyens de commande (ST) sont prévus pour l'évaluation de la tension d'origine extérieure (fu) et pour la transmission de la tension d'origine extérieure (fu) mesurée à des modules de traitement (K) prioritaires.

8. Dispositif selon la revendication 7, **caractérisé en ce que** les moyens de commande (BR) sont conçus pour la commande des interrupteurs resp. des commutateurs (U) de telle sorte que, en cas de dépassement de la tension d'origine extérieure (fu) mesurée au-delà d'un seuil de tension prédéfini, la ligne d'arrivée (ZL) reste interrompue.
